# EUROPEAN PATENT SPECIFICATION

(11) **EP 2 490 179 B1**
(45) Date of publication and mention of the grant of the patent: **09.05.2018**
(21) Application number: 11305172.6
(22) Date of filing: 18.02.2011
(51) Int. Cl.: G06T 9/00, H04N 19/00, H04N 5/262, G06T 7/00

(54) **Method and apparatus for transmitting and receiving a panoramic video stream**
Verfahren und Vorrichtung zum Senden und Empfangen eines Panoramavideostroms
Procédé et appareil pour transmettre/recevoir un flux vidéo panoramique

(43) Date of publication of application: 22.08.2012
(73) Proprietor: Alcatel Lucent, 91620 Nozay (FR)
(72) Inventor: Verzijp, Nico, 2018, Antwerpen (BE); Macq, Jean-Francois, 1083, Ganshoren (BE); Rondao Alface, Patrice, 1400, Nivelles (BE)
(74) Representative: Nokia Bell Patent Attorneys

(56) References cited:
- WO-A2-02/093916
- US-A1- 2003 071 891

## Description

The present invention pertains to omni-directional video streaming, more particularly to efficient transmission of omni-directional streams in a network.

### Background

Known delivery methods for omni-directional video streams suffer from low quality and/or slow interactivity.

### Summary

It is an object of embodiments of the present invention to allow end users to navigate with perceived low latency through a remotely captured omni-directional video scenery. It is further desired to provide rendering of the selected viewport at the best possible resolution, i.e. the best resolution made available by the camera sensor, while minimizing the overall bandwidth utilization on the end user access link.

According to a first aspect of the present invention, according to claim 1, there is provided a method for transmitting a panoramic video stream from a server apparatus to a client apparatus via a network. In an embodiment of the method according to the present invention, said aspect of image quality is a spatial resolution.

In an embodiment of the method according to the present invention, said aspect of image quality is a temporal resolution.

In an embodiment, the method according to the present invention further comprises: receiving at the server apparatus an instruction from the client apparatus; and modifying said part of said omni-directional video feed in response to said instruction.

According to another aspect of the present invention, there is provided a method for rendering a panoramic video stream received from a server apparatus at a client apparatus, the method comprising at the client apparatus: receiving a first video stream, said first video stream comprising a projection of an omni-directional video feed onto a rectangular pixel grid; receiving a second video stream, said second video stream comprising a directional video feed which substantially synchronously represents a part of said omni-directional video feed; receiving coordinate information designating said part of said omni-directional video feed represented by said directional video feed; and using at least part of said first video stream and at least part of said second video stream to render a video image corresponding to a viewing position and a viewing angle, wherein an aspect of image quality of said second video stream exceeds the same aspect of image quality of said first video stream, and wherein spatial regions covered by both said first video stream and said second video stream are rendered on the basis of the content of said second video stream.

In an embodiment, the method according to the present invention further comprises: modifying said viewing position and/or said viewing angle in response to an action by a user.

In an embodiment, the method according to the present invention further comprises: transmitting an instruction to said server apparatus pertaining to said modifying of said viewing position and/or said viewing angle.

According to an aspect of the present invention, there is provided a computer program for carrying out any of the methods described above.

According to a further aspect of the present invention, there is provided a server apparatus for transmitting a panoramic video stream to a client apparatus, the server apparatus comprising: a first receiver for receiving a plurality of video feeds; first stream generating means, operatively coupled to said first receiver, for generating a first video stream, said first video stream comprising a projection of an omni-directional video feed onto a rectangular pixel grid; second video generating means, operatively coupled to said first receiver, for generating at least one second video stream, said at least one second video stream comprising a directional video feed which substantially synchronously represents a part of said omni-directional video feed; and a transmitter adapted to transmit said first video stream, said at least one second video stream, and coordinate information designating said part of said omni-directional video feed represented by said at least one directional video feed; wherein an aspect of image quality of said at least one second video stream exceeds the same aspect of image quality of said first video stream.

In an embodiment of the apparatus of the present invention, said aspect of image quality is a spatial resolution.

In an embodiment of the apparatus of the present invention, said aspect of image quality is a temporal resolution.

In an embodiment, the apparatus of the present invention further comprises: a second receiver adapted to receive an instruction from said client apparatus, operatively coupled to said second video generating means for modifying said part of said omni-directional video feed in response to said instruction.

According to yet another aspect of the present invention, there is provided a client apparatus for rendering a panoramic video stream received from a server apparatus, the client apparatus comprising: a receiver adapted to receive a first video stream, at least one second video stream, and coordinate information, said first video stream comprising a projection of an omni-directional video feed onto a rectangular pixel grid, said second video stream comprising a directional video feed which substantially synchronously represents a part of said omni-directional video feed, and said coordinate information designating said part of said omni-directional video feed represented by said at least one directional video feed; a selection agent for determining a viewing position and a viewing angle; a renderer adapted to use at least part of said first video stream and at least part of said second video stream to render a video image corresponding to said viewing position and said viewing angle, wherein an aspect of image quality of said second video stream exceeds the same aspect of image quality of said first video stream, and wherein spatial regions covered by both said first video stream and said second video stream are rendered on the basis of the content of said second video stream.

In an embodiment of the client apparatus of the present invention, said selection agent comprises a user interface adapted to receive a command pertaining to said viewing position and/or said viewing angle from a user, said renderer being adapted to modify said rendered portion in response to said instruction.

In an embodiment, the client apparatus according to the present invention further comprises a transmitter adapted to transmit an instruction pertaining to said command to said server apparatus.

### Brief Description of the Drawings

Some embodiments of apparatus and/or methods in accordance with embodiments of the present invention are now described, by way of example only, and with reference to the accompanying drawings, in which
Figure 1 is a schematic system view representation of embodiments of various aspects of the present invention;
Figure 2 is a flow chart of an embodiment of the method for transmitting a panoramic video stream according to the present invention; and
Figure 3 is a flow chart of an embodiment of the method for rendering a panoramic video stream according to the present invention.

### Description of Embodiments

Panoramic video scenery theoretically requires a spherical video image. In reality, it consists of image information captured by a plurality of judicially arranged cameras or sensors, the outputs of which are digitally combined to form a panorama. The panorama is projected onto a rectangular pixel grid, to facilitate its transmission under the form of a regular video stream from the source to the end user's equipment.

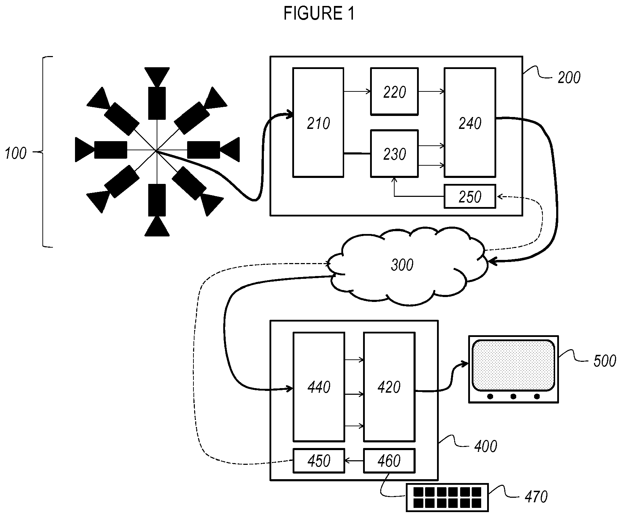

With reference to Figure 1, the end user typically consumes panoramic video content via a client device **400** with a rectangular display means **500** such as a monitor or a projector, which displays a small portion of the complete panoramic video scenery. The portion is defined by a certain viewing position and viewing angle covered by a virtual camera, and will be referred to as the viewport.

Embodiments of the present invention are based on the insight that in order to ensure a sufficiently high quality of the rendered viewport in a highly interactive panoramic video experience, it suffices to transmit a high-quality stream of a judiciously selected subset of the panoramic video scenery to the client **400,** while also transmitting a lower-quality complete panoramic video stream. Embodiments of the present invention are also based on the insight that transmission of suitable coordinate information that clearly indicates where the high-quality stream fits into the panorama will allow the client device **400** to overlay the high-quality imagery onto the panoramic background.

In the context of the present invention, "high quality" and "low quality" may refer to qualitative aspects such as spatial resolution and/or temporal resolution. The higher quality image may also be obtained by increasing the fidelity of the encoding with respect to the original feed (as measured by a metric like PSNR or others) at the same resolution. When terms such as "high resolution" and "low resolution" are used in the following description, these are to be understood as non-limiting examples of aspects of "high quality" and "low quality", unless otherwise specified.

According to embodiments of the present invention, the input from the 360° camera or camera array **100** is converted in a low-resolution panorama and a number of high-resolution tiles. The location and size of the tiles may be determined in function of any available information regarding the viewport selected by the end user, including for example a feedback signal from the client device **400** about the present state of the viewport. Tiles of statistically popular sections of the scenery may optionally be provided continuously, regardless of the end user's present viewport. When information is available about a narrowing of the viewport, i.e. when the end user attempts to zoom in on a part of the scenery, the tiles may be redefined to more adequately and/or efficiently cover the area shown in the updated viewport.

The client **400** maps the low-resolution panorama and the high-resolution tiles onto two distinct spheres. The low-resolution panorama is mapped to the outer sphere and the available high-resolution tiles are mapped to the inner sphere.

The virtual camera of the renderer being located at the center of these spheres, the high-resolution tiles always occlude the corresponding area in the low-resolution panorama. Now, the client **400** at least has the low-resolution panorama to show, even in case of very rapid navigation requests. In case a viewport is stable, high-quality tiles are shown.

In accordance with the above, Figure 1 illustrates an exemplary system consisting of a server **200** and a client **400,** arranged to communicate with each other via a network **300,** which may be a public network such as the Internet, or any other suitable means of communication. An array **100** of cameras provides images, preferably HD images. Without loss of generality, an array **100** of eight cameras is shown.

Generally speaking, the server **200** will be responsible for performing the following tasks:
- Creating a 3D descriptor;
- Composing a low-resolution panorama view (this resolution can be SD for the complete panorama or even less) and encode this in a panorama network stream;
- Creating high-resolution tiles and encoding these in a network stream;
- Handling viewport change commands received from client **400.**

In the simplest case, a tile may correspond to one of the individual camera inputs provided by the camera array **100.** The system will perform better at the client **400** (in terms of bandwidth) if several tiles are used per camera input. Each camera input may for instance be split in 4 tiles. Tiles may optionally overlap each other, to smoothen transitions between different tiles. At any time, the viewport can be composed of one or more tiles.

The listed steps are repeated by the server **200** for every frame received from the camera array **100.** For a typical video stream, the stated actions take place 24 times a second (for 24 fps video).

Depending on the viewport of the clients **400,** different tile streams are transmitted together with the panorama stream. The panorama stream is transmitted at any time. The tile streams are dynamic and are normally not transmitted when they are outside of the viewport of the client **200.**

To avoid having to change the tile streams for every minor viewport change, it is advantageous for the system to use a small number of sufficiently large tiles. Depending on the size range of the viewport of the client **200,** an embodiment using between 1 and 8 tile streams, preferably 2 to 6 tile streams, and most preferably 4 tile streams, is expected to provide good results.

Generally speaking, the client **400** will be responsible for performing the following tasks:
- Fetching the 3D descriptor;
- Fetching the panorama stream;
- Fetching the number of tile streams (only those tiles that are currently in the viewport of the client);
- Rendering tiles on a virtual sphere with radius R, and rendering the panorama on a virtual sphere with radius *R*+*ε*;
- Sending viewport change commands to the server **200.**

For the client **400** to able to map the tiles correctly in respect to the panorama, a 3D descriptor is created by the server **200,** which indicates where each tile is to be located in the surrounding 3D space. The 3D descriptor thus provides a reference in the panorama's coordinate space, and will hereinafter also be referred to as "coordinate information".

The format of the 3D descriptor may vary. The following X3D document is provided as an exemplary XML-compliant formatting, which can be used with HTML 5.

```
    <X3D profile="Immersive" version="3.2" ...>
    <Scene>
     <Shape DEF="panorama">
      <Sphere radius="21" />
     </Shape>
     <Group DEF="tiles">
      <Shape DEF="tile0">
       <IndexedTriangleStripSet index="...">
        <Coordinate point="..." />
       </IndexedTriangleStripSet>
      </Shape>
      <Shape DEF="tile1">
     </Group>
    </Scene>
    </X3D>
```

In this embodiment, the 3D descriptor is static and should be transmitted only once (at setup time) from the server **200** to the client **400.**

The panorama is rendered on a sphere which is slightly larger than the sphere used for tile rendering. The tile sphere is transparent if there is no image tile available. In that case we see the panorama image behind it. If a tile image is available, that image will not be transparent and actually replaces the low-resolution panorama with the high-resolution tile image. Some alpha blending may be performed to smooth the boundary between high-resolution and low-resolution version.

In view of the above described representation of the panoramic video scenery and the associated tiles on a set of concentric spheres, it is natural to employ spherical coordinates in the 3D descriptor. The skilled person will understand that this representation is merely a mathematical construct used to elucidate the merging process, and that other combinations of geometrical constructs and coordinate systems may be used to the same effect.

The present invention is not dependent on the codec used for encoding the panorama or the tiles.

For a given viewport, the interactivity (i.e. viewport change commands) of the end-user may include panning and tilting of the camera. This results in selection of different tile streams. As we have the high-resolution image tiles available, the end-user will always see a high-quality image.

The interactivity of the end-user may also include zooming. If the end-user zooms-in, the viewport actually becomes smaller, i.e. narrower. In the context of the present invention, this would result in a need for fewer tile streams. If there is one level of high-resolution tiles, the quality or level of detail will always remain the same, regardless of the level of zooming-in being applied. In a particular embodiment, multiple levels of higher-resolution tile streams are provided. Each level will be rendered on its own proper sphere with a radius smaller than the panorama sphere. The highest resolution image tiles will be rendered on the sphere with the smallest radius.

The client **400** may be adapted to ensure that at any zoom level there is a maximum number of tiles in the viewport. In an exemplary situation, there are three available levels: panorama, mid-quality, and high-quality; and the maximum number of tiles in the viewport is set to eight. The current viewport encompasses four mid-quality tiles and would cover sixteen high-quality tiles. As a result, the client **400** would only request the mid-quality tiles. When the end-user zooms in, the number of high-quality tiles in view will decrease (as the viewport becomes smaller). When no more than eight high-quality tiles are needed to build the viewport, the client **400** requests the appropriate high-quality tiles and drops the mid-quality tiles.

With reference to figure 1 server **200** includes a first receiver **210** for receiving a plurality of video feeds from the camera array **100.** The received video streams are forwarded to a first stream generating means **220** for generating a first video stream, which comprises a projection of an omni-directional video feed onto a rectangular pixel grid. The plurality of video streams is also forwarded to a second video generating means **230** for generating at least one second video stream, which comprises a directional video feed, which represents a tile, i.e. a part of said omni-directional video feed.

Server **200** further includes a transmitter **240** for transmitting said first video stream and said at least one second video stream, and coordinate information designating the part of the omni-directional video feed represented by the one of more tiles. The image quality of the one or more tiles, is in some aspect, better than the image quality of the first video stream, i.e. the tiles present a higher spatial or temporal resolution than the original omni-directional stream. For this reason, it is advantageous for the client **400** to replace parts of the omni-directional video scenery for which tiles are available with the corresponding tiles.

The illustrated server **200** also comprises a second receiver **250,** adapted to receive an instruction from the client **400,** pertaining to a change in the viewport displayed at the client **400.** In response to such an instruction, the second encoder **230** modifies the part of the omni-directional video feed that is being converted into a high quality tile. Server **200** comprises a transmitter **240** via which the resulting omni-directional video stream, and one or more tiles, are transmitted to the client **400** via any suitable network infrastructure **300.** The aforementioned instructions from the client **400** are received by receiver **250** via any suitable networking infrastructure, preferably the same networking infrastructure **300** used for the transmission of the video streams.

Client **400** is illustrated as being connected to an external monitor **500** and a keyboard **470.** A skilled person will immediately appreciate that other output and input means may be used instead of the illustrated ones, and that such output or input means may either be internal or external to the client device **400.**

Client device **400** includes a receiver **440** for receiving the video streams generated by the server **200.** These video streams and the corresponding coordinate information are forwarded from the receiver **440** to the renderer **420.** The forwarding of the aforementioned video streams and the coordinate information is schematically shown as a number of arrows going from the receiver **440** to the renderer **420.** The skilled person would appreciate that any suitable means of conveying the information from one part of the system to the other may be used, depending on the implementation choices made in implementing the client apparatus. Such communication means may include direct links between hardware components, API calls, physical network connections, etc. Client device **400** is further shown to include a selection agent **460,** optionally connected to the aforementioned user interface **470,** which selection agent is responsible for determining the viewport for which an image must be rendered by the renderer **420.** It is the rendered image corresponding to this selected viewport that will ultimately be shown on the monitor **500.** The selection agent **460** passes on the information designating the selected viewport to transmitter **450,** which communicates via appropriate means with receiver **250** of the server **200** as described above.

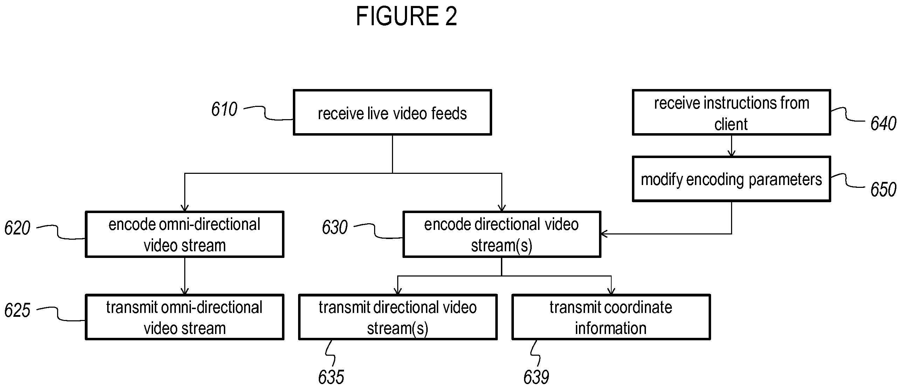

Figure 2 illustrates an exemplary embodiment of a method according to the present invention, in particular a method for transmitting an omni-directional video stream. Although the steps of this method are illustrated, and will be described hereinafter, in a particular order, the invention is not limited to embodiments in which these steps are performed in that particular order, unless it is apparent from the description that a particular step cannot take place before the completion of an earlier step.

In a first step **610,** the server **200** receives a plurality of video feeds, preferably live video feeds, from a camera array **100** to produce an omni-directional video stream. The omni-directional video stream is encoded at the server **200** in step **620** while one or more directional video streams or tiles with preferably a higher spatial resolution are also encoded in step **630.** The omni-directional video stream and the directional video streams are transmitted to a client device **400** in respective steps **625** and **635.** Substantially at the same time, coordinate information that relates the tiles to particular regions within the omni-directional video scenery, is transmitted to the client device **400** at step **639.**

The client device may be equipped to send instructions pertaining to the desired tiles to the server device **200,** which receives said instructions at step **640.** As both the client and server may have knowledge of the three-dimensional model, these instructions could be pure 3D coordinates, or they could already be translated to the desired tiles, depending on which entity does the translation. Subsequently the server will modify the encoding or selection parameters at step **650,** thus influencing the operation of the directional video stream encoder in step **630.**

In the case where all possible directional video streams are encoded at any time, step 650 may comprise specifying the subset of directional video streams that need to be transmitted.

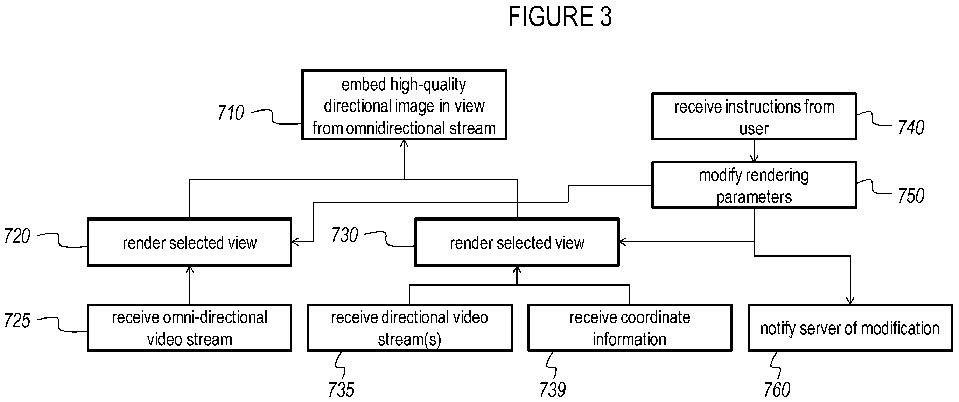

Figure 3 illustrates an exemplary embodiment of a method according to the present invention to render an omni-directional video stream. To highlight the parallelism between the transmission method, described above, and the rendering method, presently described, the present method has been illustrated from the bottom of the diagram towards the top of the diagram.

Initially, the client device **400** receives an omni-directional video stream, one or more directional video streams or tiles and coordinate information in respective steps **725, 735** and **739.** The omni-directional video stream can be decoded and rendered as a spherical video scenery in step **720,** while the tiles are rendered at their appropriate relative positions in accordance with the received coordinate information at step **730.** The rendering at step **730** is under control of rendering parameters that determine the selected viewport. Rendering parameters can be modified at anytime in step **750** under the influence of instructions received from the user at step **740** via the user interface **470** comprised in the client device **400.** As a final step towards creating the video imagery for display on monitor **500,** the omni-directional scenery created in step **720** and the high quality tiles created in step **730** are visually combined, optionally with a smoothening technique, such as alpha blending, in step **710.**

After modifying the rendering parameters (or updating the viewport), the client may notify the server accordingly in step **760.**

The system as described above may be combined with an in-network renderer. Accordingly, elements of the described server 200 may be moved to a separate network element topologically residing in-between the server **200** and the client **400,** without departing from the principles of the present invention. Such an embodiment has the benefit that it can more easily scale with the number of clients.

Thus, embodiments of the invention provide bandwidth optimal solutions for omni-directional video that still gives the best possible user experience.

A person of skill in the art would readily recognize that steps of various above described methods can be performed by programmed computers. Herein, some embodiments are also intended to cover program storage devices, e.g., digital data storage media, which are machine or computer readable and encode machine executable or computer-executable programs of instructions, wherein said instructions perform some or all of the steps of said above-described methods.

The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings illustrate the principles of the invention. It will thus be appreciated that those skilled in the art will be able to devise various arrangements that embody the principles of the invention.

## Claims

1. A method for transmitting a panoramic video stream from a server apparatus (200) to a client apparatus (400) via a network (300), the method comprising at the server apparatus (200) :
- transmitting a first video stream (625), said first video stream comprising a projection of an omni-directional video feed onto a rectangular pixel grid; and
- transmitting a second video stream (635), said second video stream comprising a directional video feed which substantially synchronously represents a part of said omni-directional video feed;
wherein an aspect of image quality of said second video stream exceeds the same aspect of image quality of said first video stream;
**characterized in that** said omni-directional video feed is received (610) from a camera array (100);
**and in that** said method further comprises transmitting coordinate information designating said part of said omni-directional video feed represented by said directional video feed.

2. The method of claim 1, wherein said aspect of image quality is a spatial resolution.

3. The method of claim 1, wherein said aspect of image quality is a temporal resolution.

4. The method of any of the preceding claims, further comprising:
- receiving (640) at the server apparatus an instruction from the client apparatus;
- modifying (650) said part of said omni-directional video feed in response to said instruction.

5. A method for rendering a panoramic video stream received from a server apparatus (200) at a client apparatus (400) via a network (300), the method comprising at the client apparatus (400):
- receiving a first video stream (725), said first video stream comprising a projection of an omni-directional video feed onto a rectangular pixel grid;
- receiving a second video stream, said second video stream comprising a directional video feed which substantially synchronously represents a part of said omni-directional video feed (735); and
- using at least part of said first video stream and at least part of said second video stream to render a video image corresponding to a viewing position and a viewing angle (710, 720, 730),
wherein an aspect of image quality of said second video stream exceeds the same aspect of image quality of said first video stream, and wherein spatial regions covered by both said first video stream and said second video stream are rendered on the basis of the content of said second video stream;
**characterized in that** said method further comprises receiving coordinate information designating said part of said omni-directional video feed represented by said directional video feed (739);
**and in that** said part of said second video stream is rendered (730) at its appropriate relative position in accordance with the received coordinate information.

6. The method of claim 5, further comprising:
- modifying (750) said viewing position and/or said viewing angle in response to an action by a user.

7. The method of claim 6, further comprising:
- transmitting (760) an instruction to said server apparatus (200) pertaining to said modifying of said viewing position and/or said viewing angle.

8. A computer program for carrying out the method of any of claims 1-7 on a computer.

9. A server apparatus (200) for transmitting a panoramic video stream to a client apparatus (400) via a network (300), the server apparatus (200) comprising:
- a first receiver (210) for receiving a plurality of video feeds from a camera array (100);
- first video stream generating means (220), operatively coupled to said first receiver (210), for generating a first video stream, said first video stream comprising a projection of an omni-directional video feed onto a rectangular pixel grid;
- second video stream generating means (230), operatively coupled to said first receiver (210), for generating at least one second video stream, said at least one second video stream comprising a directional video feed which substantially synchronously represents a part of said omni-directional video feed; and
- a transmitter (240) adapted to transmit said first video stream, said at least one second video stream, and coordinate information designating said part of said omni-directional video feed represented by said at least one directional video feed;
wherein an aspect of image quality of said at least one second video stream exceeds the same aspect of image quality of said first video stream.

10. The server apparatus (200) of claim 9, wherein said aspect of image quality is a spatial resolution.

11. The server apparatus (200) of claim 9, wherein said aspect of image quality is a temporal resolution.

12. The server apparatus (200) of any of claims 9-11, further comprising:
- a second receiver (250) adapted to receive (640) an instruction from said client apparatus (400), operatively coupled to said second video stream generating means (230)for modifying (650) said part of said omni-directional video feed in response to said instruction.

13. A client apparatus (400) for rendering a panoramic video stream received from a server apparatus (200) via a network (300), the client apparatus (400) comprising:
- a receiver (440) adapted to receive a first video stream, at least one second video stream, and coordinate information, said first video stream comprising a projection of an omni-directional video feed onto a rectangular pixel grid, and said second video stream comprising a directional video feed which substantially synchronously represents a part of said omni-directional video feed, and said coordinate information designating said part of said omni-directional video feed represented by said at least one directional video feed;
- a selection agent (460) for determining a viewing position and a viewing angle; and
- a renderer (420) adapted to use at least part of said first video stream and at least part of said second video stream to render a video image corresponding to said viewing position and said viewing angle, wherein an aspect of image quality of said second video stream exceeds the same aspect of image quality of said first video stream, and wherein spatial regions covered by both said first video stream and said second video stream are rendered on the basis of the content of said second video stream.

14. The client apparatus (400) of claim 13, wherein said selection agent (460) comprises a user interface (470) adapted to receive (740) a command pertaining to said viewing position and/or said viewing angle from a user, said renderer (420) being adapted to modify (750) said rendered portion in response to said instruction.

15. The client apparatus (400) of claim 14, further comprising a transmitter (450) adapted to transmit an instruction pertaining to said command to said server apparatus (200).

## Patentansprüche

1. Verfahren zum Senden eines Panoramavideostroms von einer Server-Vorrichtung (200) an eine Client-Vorrichtung (400) über ein Netzwerk (300), wobei das Verfahren an der Server-Vorrichtung (200) umfasst:
- Senden eines ersten Videostroms (625), wobei der besagte erste Videostrom eine Projektion einer omnidirektionalen Videozuspielung auf ein rechteckiges Pixelraster umfasst; und
- Senden eines zweiten Videostroms (635), wobei der besagte zweite Videostrom eine direktionale Videozuspielung umfasst, die einen Teil der besagten omnidirektionalen Videozuspielung im Wesentlichen synchron darstellt;
wobei ein Bildqualitätsaspekt des besagten zweiten Videostroms den gleichen Bildqualitätsaspekt des besagten ersten Videostroms übertrifft;
**dadurch gekennzeichnet, dass** die besagte omnidirektionale Videozuspielung von einer Kameraanordnung (100) empfangen (610) wird;
und dadurch, dass das besagte Verfahren weiterhin das Senden von Koordinateninformationen umfasst, die den besagten Teil der besagten omnidirektionalen Videozuspielung, der von der besagten direktionalen Videozuspielung dargestellt wird, bezeichnen.

2. Verfahren nach Anspruch 1, wobei der besagte Bildqualitätsaspekt eine räumliche Auflösung ist.

3. Verfahren nach Anspruch 1, wobei der besagte Bildqualitätsaspekt eine zeitliche Auflösung ist.

4. Verfahren nach einem beliebigen der vorstehenden Ansprüche, weiterhin umfassend:
- Empfangen (640), an der Server-Vorrichtung, eines Befehls von der Client-Vorrichtung;
- Ändern (650) des besagten Teils der besagten omnidirektionalen Videozuspielung als Reaktion auf den besagten Befehl.

5. Verfahren zum Wiedergeben eines von einer Server-Vorrichtung (200) an einer Client-Vorrichtung (400) über ein Netzwerk (300) empfangenen Panoramavideostroms, wobei das Verfahren an der Client-Vorrichtung (400) umfasst:
- Empfangen eines ersten Videostroms (725), wobei der besagte erste Videostrom eine Projektion einer omnidirektionalen Videozuspielung auf ein rechteckiges Pixelraster umfasst;
- Empfangen eines zweiten Videostroms, wobei der besagte zweite Videostrom eine direktionale Videozuspielung umfasst, die einen Teil der besagten omnidirektionalen Videozuspielung (735) im Wesentlichen synchron darstellt; und
- Verwenden mindestens eines Teils des besagten ersten Videostroms und mindestens eines Teils des besagten zweiten Videostroms zum Wiedergeben eines Videobilds entsprechend einer Betrachtungsposition und eines Betrachtungswinkels (710, 720, 730), wobei ein Bildqualitätsaspekt des besagten zweiten Videostroms den gleichen Bildqualitätsaspekt des besagten ersten Videostroms übertrifft, und wobei räumliche Bereiche, die sowohl von dem besagten ersten Videostrom als auch dem besagten zweiten Videostrom abgedeckt werden, auf Basis des Inhalts des besagten zweiten Videostroms wiedergegeben werden;
**dadurch gekennzeichnet, dass** das besagte Verfahren weiterhin das Empfangen von Koordinateninformationen umfasst, die den besagten Teil der besagten omnidirektionalen Videozuspielung, der von der besagten direktionalen Videozuspielung (739) dargestellt wird, bezeichnen;
und dadurch, dass der besagte Teil des besagten zweiten Videostroms an seiner angemessenen relativen Position in Übereinstimmung mit den empfangenen Koordinateninformationen wiedergegeben (730) wird.

6. Verfahren nach Anspruch 5, weiterhin umfassend:
- Ändern (750) der besagten Betrachtungsposition und/oder des besagten Betrachtungswinkels als Reaktion auf eine Handlung durch einen Benutzer.

7. Verfahren nach Anspruch 6, weiterhin umfassend:
- Senden (760) eines Befehls an die besagte Server-Vorrichtung (200), was zum besagten Ändern der besagten Betrachtungsposition und/oder des besagten Betrachtungswinkels gehört.

8. Computerprogramm zum Durchführen des Verfahrens nach einem beliebigen der Ansprüche 1-7 auf einem Computer.

9. Server-Vorrichtung (200) zum Senden eines Panoramavideostroms an eine Client-Vorrichtung (400) über ein Netzwerk (300), wobei die Server-Vorrichtung (200) umfasst:
- einen ersten Empfänger (210) zum Empfangen einer Vielzahl von Videozuspielungen von einer Kameraanordnung (100);
- erste Videostrom-Erzeugungsmittel (220), die betriebsfähig an den besagten ersten Empfänger (210) gekoppelt sind, zum Erzeugen eines ersten Videostroms, wobei der besagte erste Videostrom eine Projektion einer omnidirektionalen Videozuspielung auf ein rechteckiges Pixelraster umfasst;
- zweite Videostrom-Erzeugungsmittel (230), die betriebsfähig an den besagten ersten Empfänger (210) gekoppelt sind, zum Erzeugen mindestens eines zweiten Videostroms, wobei der besagte mindestens eine zweite Videostrom eine direktionale Videozuspielung umfasst, die einen Teil der besagten omnidirektionalen Videozuspielung im Wesentlichen synchron darstellt; und
- einen Sender (240), der angepasst ist zum Senden des besagten ersten Videostroms, des besagten mindestens einen zweiten Videostroms und der Koordinateninformationen, die den besagten Teil der besagten omnidirektionalen Videozuspielung, der von der besagten mindestens einen direktionalen Videozuspielung dargestellt wird, bezeichnen; wobei ein Bildqualitätsaspekt des besagten mindestens einen zweiten Videostroms den gleichen Bildqualitätsaspekt des besagten ersten Videostroms übertrifft.

10. Server-Vorrichtung (200) nach Anspruch 9, wobei der besagte Bildqualitätsaspekt eine räumliche Auflösung ist.

11. Server-Vorrichtung (200) nach Anspruch 9, wobei der besagte Bildqualitätsaspekt eine zeitliche Auflösung ist.

12. Server-Vorrichtung (200) nach einem beliebigen der Ansprüche 9-11, weiterhin umfassend:
- einen zweiten Empfänger (250), der angepasst ist zum Empfangen (640) eines Befehls von der besagten Client-Vorrichtung (400), und der betriebsfähig an die besagten zweiten Videostrom-Erzeugungsmittel (230) gekoppelt ist, um den besagten Teil der besagten omnidirektionalen Videozuspielung als Reaktion auf den besagten Befehl zu ändern (650).

13. Client-Vorrichtung (400) zum Wiedergeben eines von einer Server-Vorrichtung (200) über ein Netzwerk (300) empfangenen Panoramavideostroms, wobei die Client-Vorrichtung (400) umfasst:
- einen Empfänger (440), der angepasst ist zum Empfangen eines ersten Videostroms, mindestens eines zweiten Videostroms und von Koordinateninformationen, wobei der besagte erste Videostrom eine Projektion einer omnidirektionalen Videozuspielung auf ein rechteckiges Pixelraster umfasst, und der besagte zweite Videostrom eine direktionale Videozuspielung umfasst, die einen Teil der besagten omnidirektionalen Videozuspielung im Wesentlichen synchron darstellt, und die besagten Koordinateninformationen den besagten Teil der besagten omnidirektionalen Videozuspielung, der von der besagten mindestens einen direktionalen Videozuspielung dargestellt wird, bezeichnen;
- ein Auswahlmittel (460) zum Bestimmen einer Betrachtungsposition und eines Betrachtungswinkels; und
- ein Wiedergabegerät (420) das angepasst ist zum Verwenden mindestens eines Teils des besagten ersten Videostroms und mindestens eines Teils des besagten zweiten Videostroms zum Wiedergeben eines Videobilds entsprechend der besagten Betrachtungsposition und des besagten Betrachtungswinkels, wobei ein Bildqualitätsaspekt des besagten zweiten Videostroms den gleichen Bildqualitätsaspekt des besagten ersten Videostroms übertrifft, und wobei räumliche Bereiche, die sowohl von dem besagten ersten Videostrom als auch dem besagten zweiten Videostrom abgedeckt werden, auf Basis des Inhalts des besagten zweiten Videostroms wiedergegeben werden.

14. Client-Vorrichtung (400) nach Anspruch 13, wobei das besagte Auswahlmittel (460) eine Benutzerschnittstelle (470) umfasst, die angepasst ist zum Empfangen (740) einer Anweisung, die zu der besagten Betrachtungsposition und/oder dem besagten Betrachtungswinkel von einem Benutzer gehört, wobei das besagte Wiedergabegerät (420) angepasst ist zum Ändern (750) des besagten wiedergegebenen Abschnitts als Reaktion auf den besagten Befehl.

15. Client-Vorrichtung (400) nach Anspruch 14, weiterhin umfassend einen Sender (450), der angepasst ist zum Senden eines Befehls, der zu der besagten Anweisung gehört, an die besagte Server-Vorrichtung (200).

## Revendications

1. Procédé de transmission d'un flux vidéo panoramique à partir d'un appareil de serveur (200) vers un appareil client (400) par l'intermédiaire d'un réseau (300), le procédé comprenant au niveau de l'appareil de serveur (200) les étapes suivantes :
- transmettre un premier flux vidéo (625), ledit premier flux vidéo comprenant une projection d'un flux vidéo omnidirectionnel sur une grille rectangulaire de pixels ; et
- transmettre un second flux vidéo (635), ledit second flux vidéo comprenant un flux vidéo directionnel qui représente de manière sensiblement synchrone une partie dudit flux vidéo omnidirectionnel ;
dans lequel un aspect de la qualité d'image dudit second flux vidéo dépasse le même aspect de la qualité d'image dudit premier flux vidéo ;
**caractérisé en ce que** ledit flux vidéo omnidirectionnel provient (610) d'un réseau de caméras (100) ;
et **en ce que** ledit procédé comprend en outre la transmission d'informations de coordonnées désignant ladite partie dudit flux vidéo omnidirectionnel représentée par ledit flux vidéo directionnel.

2. Procédé selon la revendication 1, dans lequel ledit aspect de la qualité d'image est une résolution spatiale.

3. Procédé selon la revendication 1, dans lequel ledit aspect de la qualité d'image est une résolution temporelle.

4. Procédé selon l'une quelconque des revendications précédentes, comprenant en outre les étapes suivantes :
- recevoir (640) au niveau de l'appareil de serveur une instruction provenant de l'appareil client ;
- modifier (650) ladite partie dudit flux vidéo omnidirectionnel en réponse à ladite instruction.

5. Procédé de rendu d'un flux vidéo panoramique provenant d'un appareil de serveur (200) au niveau d'un appareil client (400) par l'intermédiaire d'un réseau (300), le procédé comprenant au niveau de l'appareil client (400) les étapes suivantes :
- recevoir un premier flux vidéo (725), ledit premier flux vidéo comprenant une projection d'un flux vidéo omnidirectionnel sur une grille rectangulaire de pixels ;
- recevoir un second flux vidéo, ledit second flux vidéo comprenant un flux vidéo directionnel qui représente de manière sensiblement synchrone une partie dudit flux vidéo omnidirectionnel (735) ; et
- utiliser au moins une partie dudit premier flux vidéo et au moins une partie dudit second flux vidéo pour effectuer le rendu d'une image vidéo correspondant à une position de vision et à un angle de vision (710, 720, 730),
dans lequel un aspect de la qualité d'image dudit second flux vidéo dépasse le même aspect de la qualité d'image dudit premier flux vidéo, et dans lequel des régions spatiales couvertes par ledit premier flux vidéo et ledit second flux vidéo sont rendues sur la base du contenu dudit second flux vidéo ;
**caractérisé en ce que** ledit procédé comprend en outre la réception d'informations de coordonnées désignant ladite partie dudit flux vidéo omnidirectionnel représentée par ledit flux vidéo directionnel (739).
et **en ce que** ladite partie dudit second flux vidéo est rendue (730) à sa position relative appropriée conformément aux informations de coordonnées reçues.

6. Procédé selon la revendication 5, comprenant en outre l'étape suivante :
- modifier (750) ladite position de vision et/ou ledit angle de vision en réponse à une action par un utilisateur.

7. Procédé selon la revendication 6, comprenant en outre l'étape suivante :
- transmettre (760) une instruction audit appareil de serveur (200) se rapportant à ladite modification de ladite position de vision et/ou dudit angle de vision.

8. Programme informatique pour exécuter le procédé selon l'une quelconque des revendications 1 à 7 sur un ordinateur.

9. Appareil de serveur (200) pour transmettre un flux vidéo panoramique à un appareil client (400) par l'intermédiaire d'un réseau (300), l'appareil de serveur (200) comprenant :
- un premier récepteur (210) pour recevoir une pluralité de flux vidéo à partir d'un réseau de caméras (100) ;
- un moyen de génération de premier flux vidéo (220), couplé de manière opérationnelle audit premier récepteur (210), pour générer un premier flux vidéo, ledit premier flux vidéo comprenant une projection d'un flux vidéo omnidirectionnel sur une grille rectangulaire de pixels ;
- un moyen de génération de second flux vidéo (230), couplé de manière opérationnelle audit premier récepteur (210), pour générer au moins un second flux vidéo, ledit au moins un second flux vidéo comprenant un flux vidéo directionnel qui représente de manière sensiblement synchrone une partie dudit flux vidéo omnidirectionnel ; et
- un émetteur (240) adapté pour transmettre ledit premier flux vidéo, ledit au moins un second flux vidéo et des informations de coordonnées désignant ladite partie dudit flux vidéo omnidirectionnel représentée par ledit au moins un flux vidéo directionnel ;
dans lequel un aspect de la qualité d'image dudit au moins un second flux vidéo dépasse le même aspect de la qualité d'image dudit premier flux vidéo.

10. Appareil de serveur (200) selon la revendication 9, dans lequel ledit aspect de la qualité d'image est une résolution spatiale.

11. Appareil de serveur (200) selon la revendication 9, dans lequel ledit aspect de la qualité d'image est une résolution temporelle.

12. Appareil de serveur (200) selon l'une quelconque des revendications 9 à 11, comprenant en outre :
- un second récepteur (250) adapté pour recevoir (640) une instruction dudit appareil client (400), couplé de manière opérationnelle audit moyen de génération de second flux vidéo (230) pour modifier (650) ladite partie dudit flux vidéo omnidirectionnel en réponse à ladite instruction.

13. Appareil client (400) de rendu d'un flux vidéo panoramique provenant d'un appareil de serveur (200) par l'intermédiaire d'un réseau (300), l'appareil client (400) comprenant :
- un récepteur (440) adapté pour recevoir un premier flux vidéo, au moins un second flux vidéo et des informations de coordonnées, ledit premier flux vidéo comprenant une projection d'un flux vidéo omnidirectionnel sur une grille rectangulaire de pixels, ledit second flux vidéo comprenant un flux vidéo directionnel qui représente de manière sensiblement synchrone une partie dudit flux vidéo omnidirectionnel, et lesdites informations de coordonnées désignant ladite partie dudit flux vidéo omnidirectionnel représentée par ledit au moins un flux vidéo directionnel ;
- un agent de sélection (460) pour déterminer une position de vision et un angle de vision ; et
- un moteur de rendu (420) adapté pour utiliser au moins une partie dudit premier flux vidéo et au moins une partie dudit second flux vidéo pour effectuer le rendu d'une image vidéo correspondant à ladite position de vision et audit angle de vision, dans lequel un aspect de la qualité d'image dudit second flux vidéo dépasse le même aspect de la qualité d'image dudit premier flux vidéo, et dans lequel les régions spatiales couvertes par ledit premier flux vidéo et ledit second flux vidéo sont rendues sur la base du contenu dudit second flux vidéo.

14. Appareil client (400) selon la revendication 13, dans lequel ledit agent de sélection (460) comprend une interface utilisateur (470) adaptée pour recevoir (740) une commande se rapportant à ladite position de vision et/ou audit angle de vision d'un utilisateur, ledit moteur de rendu (420) étant adapté pour modifier (750) ladite partie rendue en réponse à ladite instruction.

15. Appareil client (400) selon la revendication 14, comprenant en outre un émetteur (450) adapté pour transmettre une instruction se rapportant à ladite commande audit appareil de serveur (200).
